# EUROPEAN PATENT SPECIFICATION

(11) **EP 2 660 689 B1**
(45) Date of publication and mention of the grant of the patent: **25.12.2019**
(21) Application number: 12166813.1
(22) Date of filing: 04.05.2012
(51) Int. Cl.: G06F 3/041, G06F 1/3234, G06F 3/044

(54) **Electronic device and method of detecting touches on a touch-sensitive display**
Elektronische Vorrichtung und Verfahren zum Erkennen von Berührungen auf einer berührungsempfindlichen Anzeige
Dispositif électronique et procédé de détection des touches sur un affichage sensible au toucher

(43) Date of publication of application: 06.11.2013
(73) Proprietor: BlackBerry Limited, Waterloo, ON N2K 0A7 (CA)
(72) Inventor: Singh, Amit Pal, Waterloo, Ontario N2L 3W8 (CA); Robinson, James Alexander, Waterloo, Ontario N2L 3W8 (CA); Dolson, John Edward, Ottawa, Ontario K2K 3K1 (CA); Dippel, Jeffrey John Paul, Waterloo, Ontario N2L 3W8 (CA); Purdy, Michael Lane, Waterloo, Ontario N2L 3W8 (CA)
(74) Representative: Vigand, Philippe

(56) References cited:
- EP-A1- 2 434 368
- US-A1- 2006 284 857
- US-A1- 2011 025 619
- US-A1- 2012 105 357

## Description

### FIELD OF TECHNOLOGY

The present disclosure relates to electronic devices including, but not limited to, portable electronic devices having touch-sensitive displays and their control.

### BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones (smart phones), Personal Digital Assistants (PDAs), tablet computers, and laptop computers, with wireless network communications or near-field communications connectivity such as Bluetooth® capabilities.

Portable electronic devices such as PDAs, or tablet computers are generally intended for handheld use and ease of portability. Smaller devices are generally desirable for portability. A touch-sensitive display, also known as a touchscreen display, is particularly useful on handheld devices, which are small and may have limited space for user input and output. The information displayed on the display may be modified depending on the functions and operations being performed. Improvements in electronic devices with touch-sensitive displays are desirable.

US 2011/0025619 A1 describes an electronic analysis circuit for a multicontact passive-matrix tactile sensor including an electrical supply mechanism powering one of two axes of the matrix, and a mechanism detecting electrical characteristics along the other axis of the matrix, at nodes between the two axes. At least one scanning characteristic is modulated locally or temporally.

US 2006/0284857 A1 describes a power-saving function for a touch screen device which provides efficient use of power, such as from a battery for a portable device. The touch screen device may include a sampling unit for digitizing an input to the touch screen. The power-saving function is provided with a battery level-monitoring unit for monitoring a battery level, and a sampling rate controller for controlling a sampling rate of the sampling unit based on the battery level monitored by the battery level-monitoring unit.

US2012/0105357 A1 discloses various embodiments of a capacitive touchscreen system that is capable of sensing finger touches made on a capacitive touchscreen according to various scanning modes that reduce power consumption of the capacitive touchscreen system. In a Full Scan Mode the entire touchscreen is scanned at a fractional frame rate or scan rate, which is less than the full or maximum frame or scan rate, which helps reduce power consumption. If no touches are detected for the duration of time, the system enters into a rest mode, in which a fraction such as 1/4 of the total number of cells or pixels of touchscreen 90 is scanned per frame and at a frame rate that is reduced to a fraction of the maximum or full frame rate.

### SUMMARY

According to a first aspect of the invention, a method as per claim 1 is provided. According to a second aspect of the invention, an electronic device as per claim 2 is provided. According to a third aspect of the present invention, a computer-readable storage medium as per claim 3 is provided.

### BRIEF DESCRIPTION OF THE DRAWINGS

FIG. 1 is a block diagram of a portable electronic device in accordance with the disclosure.
FIG. 2 is a front view of an electronic device in accordance with the disclosure.
FIG. 3 is a flowchart illustrating an example of a method of detecting touches on a touch-sensitive display in accordance with the disclosure.
FIG. 4 and FIG. 5 illustrate pulses of a signal utilized to drive a drive electrode during scanning in accordance with the disclosure.
FIG. 6 is a flowchart illustrating an example of a method of detecting touches on a touch-sensitive display in accordance with the disclosure.

### DETAILED DESCRIPTION

The following describes an electronic device and a method including applying a first plurality of pulses to scanning electrodes during a first scan to detect touches on a touch-sensitive display, receiving an indication to scan in a reduced power condition, and when in the reduced power condition, applying a second plurality of pulses to scanning electrodes during a second scan to detect touches on the touch-sensitive display, wherein the second plurality of pulses comprises fewer pulses than the first plurality of pulses.

For simplicity and clarity of illustration, reference numerals may be repeated among the figures to indicate corresponding or analogous elements. Numerous details are set forth to provide an understanding of the embodiments described herein. The embodiments may be practiced without these details. In other instances, well-known methods, procedures, and components have not been described in detail to avoid obscuring the embodiments described. The description is not to be considered as limited to the scope of the embodiments described herein.

The disclosure generally relates to an electronic device, such as a portable electronic device as described herein. Examples of electronic devices include mobile, or handheld, wireless communication devices such as pagers, cellular phones, cellular smart-phones, wireless organizers, personal digital assistants, wirelessly enabled notebook computers, tablet computers, mobile internet devices, electronic navigation devices, and so forth. The portable electronic device may also be a portable electronic device without wireless communication capabilities, such as a handheld electronic game device, digital photograph album, digital camera, media player, e-book reader, and so forth.

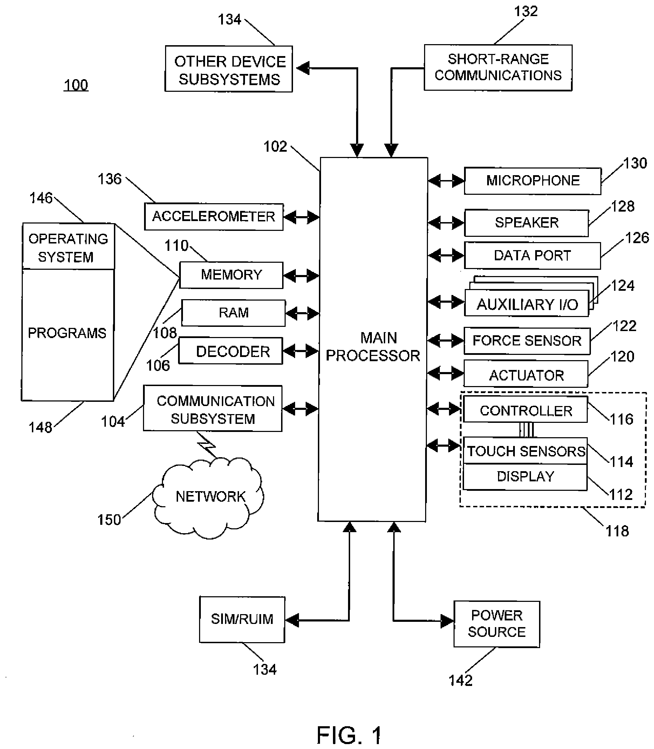

A block diagram of an example of a portable electronic device 100 is shown in FIG. 1. The portable electronic device 100 includes multiple components, such as a processor 102 that controls the overall operation of the portable electronic device 100. Communication functions, including data and voice communications, are performed through a communication subsystem 104. Data received by the portable electronic device 100 is decompressed and decrypted by a decoder 106. The communication subsystem 104 receives messages from and sends messages to a wireless network 150. The wireless network 150 may be any type of wireless network, including, but not limited to, data wireless networks, voice wireless networks, and networks that support both voice and data communications. A power source 142, such as one or more rechargeable batteries or a port to an external power supply, powers the portable electronic device 100.

The processor 102 interacts with other components, such as a Random Access Memory (RAM) 108, memory 110, a touch-sensitive display 118, one or more actuators 120, one or more force sensors 122, an auxiliary input/output (I/O) subsystem 124, a data port 126, a speaker 128, a microphone 130, short-range communications 132 and other device subsystems 134. The touch-sensitive display 118 includes a display 112 and touch sensors 114 that are coupled to at least one controller 116 that is utilized to interact with the processor 102. Input via a graphical user interface is provided via the touch-sensitive display 118. Information, such as text, characters, symbols, images, icons, and other items that may be displayed or rendered on a portable electronic device, is displayed on the touch-sensitive display 118 via the processor 102. The processor 102 may also interact with an accelerometer 136 that may be utilized to detect direction of gravitational forces or gravity-induced reaction forces.

To identify a subscriber for network access, the portable electronic device 100 may utilize a Subscriber Identity Module or a Removable User Identity Module (SIM/RUIM) card 138 for communication with a network, such as the wireless network 150. Alternatively, user identification information may be programmed into memory 110.

The portable electronic device 100 includes an operating system 146 and software programs, applications, or components 148 that are executed by the processor 102 and are typically stored in a persistent, updatable store such as the memory 110. Additional applications or programs may be loaded onto the portable electronic device 100 through the wireless network 150, the auxiliary I/O subsystem 124, the data port 126, the short-range communications subsystem 132, or any other suitable subsystem 134.

A received signal such as a text message, an e-mail message, or web page download is processed by the communication subsystem 104 and input to the processor 102. The processor 102 processes the received signal for output to the display 112 and/or to the auxiliary I/O subsystem 124. A subscriber may generate data items, for example e-mail messages, which may be transmitted over the wireless network 150 through the communication subsystem 104. For voice communications, the overall operation of the portable electronic device 100 is similar. The speaker 128 outputs audible information converted from electrical signals, and the microphone 130 converts audible information into electrical signals for processing.

The touch-sensitive display 118 may be any suitable touch-sensitive display, such as a capacitive, resistive, infrared, surface acoustic wave (SAW) touch-sensitive display, strain gauge, optical imaging, dispersive signal technology, acoustic pulse recognition, and so forth. A capacitive touch-sensitive display includes one or more capacitive touch sensors 114. The capacitive touch sensors may comprise any suitable material, such as indium tin oxide (ITO).

One or more touches, also known as touch contacts or touch events, may be detected by the touch-sensitive display 118. The processor 102 may determine attributes of the touch, including a location of the touch. Touch location data may include data for an area of contact or data for a single point of contact, such as a point at or near a center of the area of contact. The location of a detected touch may include x and y components, e.g., horizontal and vertical components, respectively, with respect to one's view of the touch-sensitive display 118. A touch may be detected from any suitable input member, such as a finger, thumb, appendage, or other objects, for example, a stylus, pen, or other pointer, depending on the nature of the touch-sensitive display 118. Multiple simultaneous touches may be detected.

One or more gestures may also be detected by the touch-sensitive display 118. A gesture, such as a swipe, also known as a flick, is a particular type of touch on a touch-sensitive display 118 and may begin at an origin point and continue to an end point, for example, a concluding end of the gesture. A gesture may be identified by attributes of the gesture, including the origin point, the end point, the distance travelled, the duration, the velocity, and the direction, for example. A gesture may be long or short in distance and/or duration. Two points of the gesture may be utilized to determine a direction of the gesture. A gesture may also include a hover. A hover may be a touch at a location that is generally unchanged over a period of time or is associated with the same selection item for a period of time.

Optional force sensors 122 may be disposed in conjunction with the touch-sensitive display 118 to determine or react to forces applied to the touch-sensitive display 118. The force sensor 122 may be disposed in line with a piezo actuator 120. The force sensors 122 may be force-sensitive resistors, strain gauges, piezoelectric or piezoresistive devices, pressure sensors, quantum tunneling composites, force-sensitive switches, or other suitable devices. Force as utilized throughout the specification, including the claims, refers to force measurements, estimates, and/or calculations, such as pressure, deformation, stress, strain, force density, force-area relationships, thrust, torque, and other effects that include force or related quantities. Optionally, force information related to a detected touch may be utilized to select information, such as information associated with a location of a touch. For example, a touch that does not meet a force threshold may highlight a selection option, whereas a touch that meets a force threshold may select or input that selection option. Selection options include, for example, displayed or virtual keys of a keyboard; selection boxes or windows, e.g., "cancel," "delete," or "unlock"; function buttons, such as play or stop on a music player; and so forth. Different magnitudes of force may be associated with different functions or input. For example, a lesser force may result in panning, and a higher force may result in zooming.

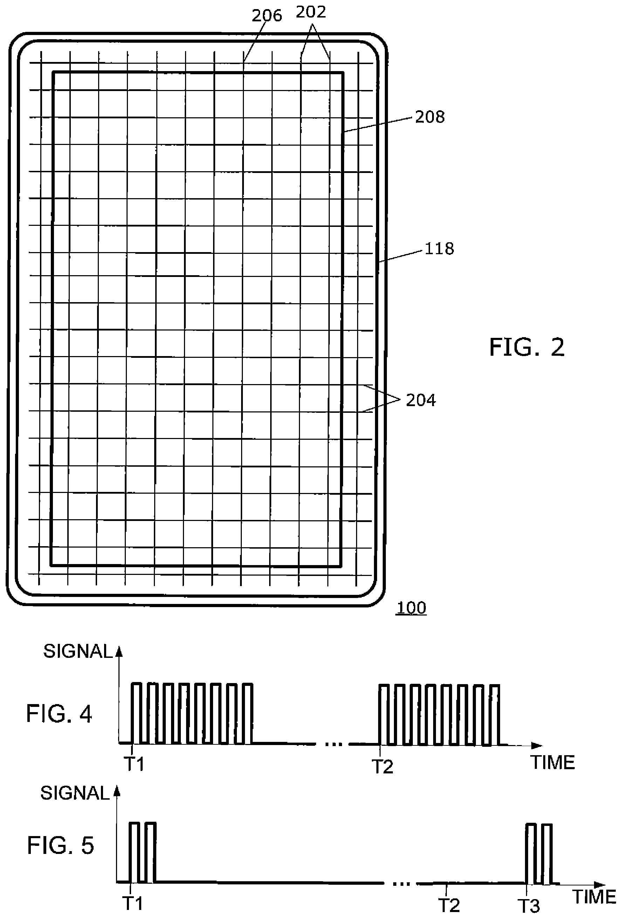

A front view of an example of the electronic device 100 is shown in FIG. 2. The electronic device 100 includes the touch-sensitive display 118. The touch-sensitive display 118 may be a capacitive touch-sensitive display that includes capacitive touch sensors. The touch sensors include, for example, drive electrodes, also referred to as scanning electrodes, and sense electrodes. The electrodes 202 and the electrodes 204 may comprise any suitable material, such as indium tin oxide (ITO). The electrodes 202 and the electrodes 204 are not visible when viewing the electronic device 100 but are illustrated in FIG. 2 for the purpose of the present description. In the example illustrated in FIG. 2, the vertical electrodes 202 may be the drive electrodes and the horizontal electrodes 204 may be the sense electrodes. Alternatively, the horizontal electrodes 204 may be the drive electrodes and the vertical electrodes 202 may be the sense electrodes.

The touch-sensitive display 118 includes a display area in which information may be displayed, and a non-display area extending around the periphery of the display area. The display area may include the area inside the rectangle 208 in FIG. 2 and the non-display area may include a surrounding area. Information is typically not displayed in the non-display area, which area is utilized to accommodate, for example, electronic traces or electrical connections, adhesives or other sealants, and/or protective coatings around the edges of the display area. The electrodes 202 and the electrodes 204 may be disposed in the non-display area or may extend from the display area into the non-display area.

In this example, the drive electrodes 202 and the sense electrodes 204 are coupled to the touch controller 116, for example, via a flex connector. The drive electrodes 202 are driven by the touch controller 116 such that pulses of signal are carried by the drive electrodes 202. The signal may be, for example, current or applied voltage. The sense electrodes 204 are utilized to detect changes in the signal at the nodes 206, which are the locations at which the sense electrodes 204 cross over the drive electrodes 202. To determine a touch location, the touch-sensitive display 118 is scanned by driving the drive electrodes 202 while signals from sense electrodes 204 are received at the touch controller 116. Each scan of the touch-sensitive display 118 includes multiple frames. In each frame, a drive electrode 202 is driven utilizing multiple pulses, while receiving signals from a sense electrode 204. Each drive electrode 202 may be driven in multiple frames while sensing utilizing each of the sense electrodes 204.

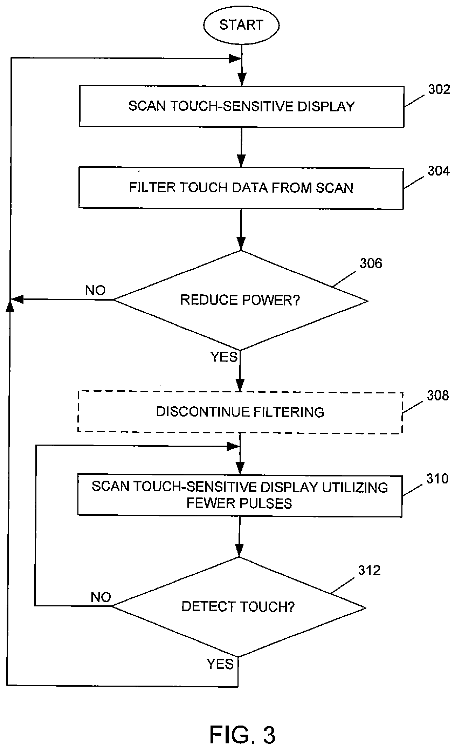

A flowchart illustrating an example of a method of detecting touches on the touch-sensitive display 118 is shown in FIG. 3. The method may be carried out by software executed, for example, by the touch controller 116. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable storage medium, such as a non-transitory computer-readable storage medium, which medium is tangible.

During operation of the portable electronic device 100, the touch-sensitive display is scanned 302 by driving the drive electrodes 202 while signals from the sense electrodes 204 are received at the touch controller 116. During a frame of the scan, one drive electrode 202 is driven by applying multiple pulses of a signal, such as shown in FIG. 4, while sensing utilizing a sense electrode 204. Frames of two scans are illustrated in FIG. 4. The frame start times are separated by a period of time from T1 to T2. Between frames for a given drive electrode 202, other drive electrodes 202 may be driven.

Touch data is received at the controller 116 during scanning of the touch-sensitive display 118 and the touch data may be filtered 304 at the controller 116. For example, the touch data may be compared to touch data previously reported by the controller 116 to the processor 102. When, for example, a touch is detected, and the touch does not move by a threshold distance, the new touch location may not be reported to the processor 102. This filtering is performed to reduce the noise and/or jitter and reduce the data reported to the processor 102. Alternatively, other noise reduction methods may be utilized to improve accuracy of a reported touch. For example, a common mode noise reduction method may be utilized.

When an indication to enter a low-power condition, or reduced power condition, is received 306, for example, from the processor 102, the process continues at 308. The indication may be a command received from the processor. The low-power condition or reduced power condition, which may be referred to as a "sleep" condition or state, is a condition in which no information is displayed on the touch-sensitive display. During a low-power condition, the electronic device 100 may discontinue processes or operate processes at a slower speed and one or more hardware components may be powered-down or operated at a slower speed to conserve power or provide other advantages. The electronic device 100 may operate in the low-power condition when the processor 102 determines that no touch is detected on the touch-sensitive display 118 for a period of time that meets a threshold, when no input is generally detected by the electronic device 100, when the device is locked by selection of a button or receipt of a gesture on the touch-sensitive display 118, or when the device is placed in a holster or covered by a cover, to name a few examples.

Optionally, the filtering at the controller 116 may be discontinued 308 to reduce the power utilized by the processor to perform the filtering. The touch-sensitive display is scanned 310 by applying fewer pulses to the drive electrodes than the number of pulses utilized in a normal or full-power condition. During a frame of the scan, a drive electrode 202 is driven by applying fewer pulses of current/voltage while sensing utilizing a sense electrode 204. For example, a drive electrode 202 may be driven utilizing half the number of pulses utilized to drive the electrode 202 during scanning at 302. Power is conserved by driving the scan electrodes utilizing fewer pulses than the number of pulses utilized in a full-power condition, such as shown in FIG. 5. Fewer pulses are applied to each scanning electrode during a scan when the electronic device 100 is in the low-power condition than the number of pulses applied to each scanning electrode during a scan when the electronic device is in the full-power condition. A touch on the touch-sensitive display 118 is detectable when the scanning electrodes are driven utilizing fewer pulses. Fewer pulses may result in reduced touch location accuracy.

When a touch on the touch-sensitive display is detected 312, the process continues at 302. The drive electrodes 202 are again driven utilizing a greater number of pulses during scanning in response to detecting the touch.

Thus, the portable electronic device 100 may utilize less power by applying fewer pulses to the drive electrodes 202 to detect a touch. When a touch is detected, the location may be accurately and reliably determined by resuming scanning by applying a greater number of pulses to the drive electrodes 202. By reducing the number of pulses applied to the drive electrodes 202, touches on the touch-sensitive display are still detected and the chance of not detecting a touch or missing the touch is low.

An example of multiple pulses of a signal utilized to drive a drive electrode 202 in one frame of a scan is illustrated in FIG. 4. In this example, the frame includes 8 pulses that are utilized to drive a drive electrode 202. Eight pulses, which may be square-wave pulses, may be utilized when the electronic device is operating in a full-power condition. A drive electrode 202 may be driven with eight pulses in a frame of a scan. A different drive electrode 202 is driven in each successive frame of the scan.

Another example of multiple pulses of a signal utilized to drive a drive electrode 202 in one frame of a scan is illustrated in FIG. 5. In this example, 2 pulses are utilized to drive the drive electrode 202 in one frame of a scan when the portable electronic device 100 is operating in the low-power condition. 2 pulses are utilized to drive an electrode in a frame of a scan, rather than 8 pulses, to conserve power while detecting a touch. Each of the drive electrodes 202 may be driven with 2 pulses in a frame of a scan. The time during which the drive electrodes 202 are driven when the portable electronic device 100 is operating in the low-power condition is much less than the time during which the drive electrodes 202 are driven when in the full-power condition. Thus, the total time of one scan when operating in the low-power condition is much less than the total time of one scan when operating in the full-power condition. The sleep time, which is the time between scans, is increased when in the low-power condition compared to the full-power condition. The number of pulses may be reduced from the number utilized when in the full-power condition to any number. The pulses may be spread apart in time such that the time between pulses may be increased when in the low-power condition compared to the time between pulses when in the full-power condition. For example, the scans in the low-power condition may be separated by a time from T1 to T3, where T3 is further out in time than T2.

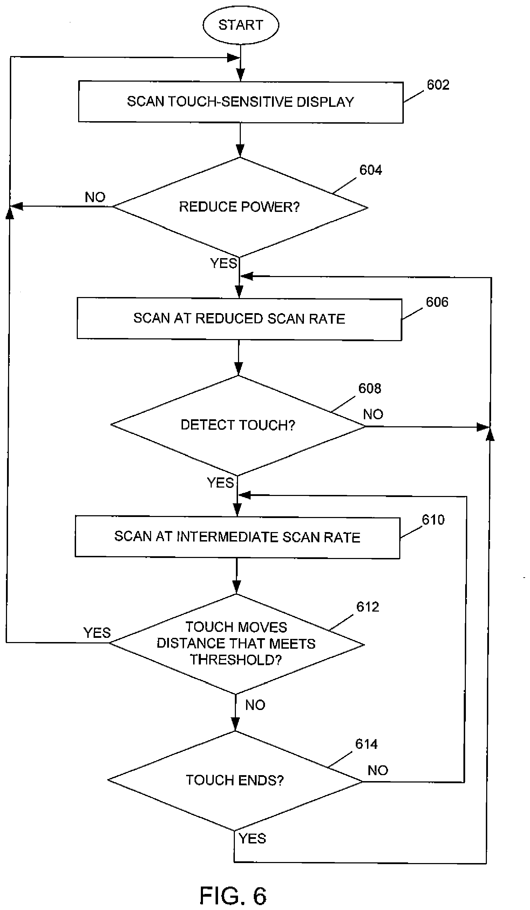

A flowchart illustrating another example of a method of detecting touches on the touch-sensitive display 118 is shown in FIG. 6. The method may be carried out by software executed, for example, by the touch controller 116. Coding of software for carrying out such a method is within the scope of a person of ordinary skill in the art given the present description. The method may contain additional or fewer processes than shown and/or described, and may be performed in a different order. Computer-readable code executable by at least one processor of the portable electronic device to perform the method may be stored in a computer-readable medium, such as a non-transitory computer-readable medium.

The touch-sensitive display 118 is scanned 602 at regular intervals in time to detect touches and to detect movement of touches on the touch-sensitive display 118. The touch-sensitive display 118 is scanned by driving the drive electrodes 202 while signals from sense electrodes 204 are received at the touch controller 116. Each scan of the touch-sensitive display 118 includes multiple frames in which a drive electrode 202 is driven while receiving signals from a sense electrode 204. Information may also be displayed on the touch-sensitive display 118.

When an indication to enter a low-power condition is received 604, for example, from the processor 102, the process continues at 606. The indication may be a command received from the processor 102 when the processor 102 determines that no touch is detected on the touch-sensitive display 118 for a period of time that meets a threshold, when no input is generally detected by the electronic device 100, when the device is locked by selection of a button or receipt of a gesture on the touch-sensitive display 118, or when the device is placed in a holster or covered by a cover, to name a few examples.

The touch-sensitive display 118 is scanned 606 at a reduced scanning rate by increasing the period of time between scans of the touch-sensitive display 118. The scans may be carried out at regular intervals in time and the time during which scans are not performed is increased. Power consumption is reduced by scanning the touch-sensitive display 118 less frequently. Display of information may also be discontinued.

The touch-sensitive display 118 is scanned less frequently until, for example, a touch is detected on the touch-sensitive display 118. In response to detecting 608 a touch on the touch-sensitive display 118, the process continues at 610 and the touch-sensitive display 118 is scanned 610 at an intermediate scanning rate. The intermediate scanning rate is a scanning rate that is between scanning rate when the electronic device 100 operates in the full-power condition, referred to as the full-power scanning rate, and the scanning rate when the electronic device 100 operates in the low-power condition at 606, referred to as the low-power scanning rate. The scanning rate is increased to the intermediate scanning rate by decreasing the time between scans such that the time between scans is greater than the time between scans at 602 and less than the time between scans at 606. For example, the time between scans may be an average of the time between scans at 602 and the time between scans at 606.

When the touch moves a distance that meets a threshold at 612, the process continues at 602 and the touch-sensitive display 118 is again scanned at the full-power scanning rate. Thus, the distance between the detected touch location and the original touch location for that touch is determined. When the distance meets a threshold distance, the scanning resumes at 602. A value may meet a threshold when the value is equal to or exceeds the threshold.

When the touch does not move a distance that meets the threshold, the process continues at 614. When the touch ends 614, the process continues at 606 and the touch-sensitive display 118 is again scanned at the low-power scanning rate. When the touch does not end at 614, scanning continues at the intermediate scanning rate.

The method of detecting touches described with reference to FIG. 4 may be performed separate from or with the method described with reference to FIG. 3. For example, when the electronic device 100 enters the low-power condition at 306, the scanning at 310 may also be performed at a reduced scanning rate by increasing the period of time between scans of the touch-sensitive display 118. In response to detecting a touch on the touch-sensitive display 118, the touch-sensitive display 118 may be scanned at the intermediate scanning rate. When the touch moves a distance that meets a threshold, the touch-sensitive display 118 is again scanned at the full-power scanning rate.

Power consumption is reduced when scanning at the low power scanning rate. Power consumption is increased when a touch is detected such that movement of the touch is detectable. Power consumption is not increased to full power until the touch moves at least a threshold distance. Thus, a gesture on the touch-sensitive display 118 may be utilized to again display information and resume scanning of the touch-sensitive display 118 at the full power scanning rate. Touches, such as inadvertent touches, that do not move the threshold distance on the touch-sensitive display 118 do not cause the touch-sensitive display 118 to return to full power scanning.

The described embodiments are to be considered in all respects only as illustrative and not restrictive. The scope of the present disclosure is, therefore, indicated by the appended claims rather than by the foregoing description.

## Claims

1. A method for detecting touches on a touch-sensitive display (118) of an electronic device, the electronic device comprising a plurality of drive electrodes (202) and a plurality of sense electrodes (204), the method comprising:
when in a full-power operating condition, scanning (302) the touch-sensitive display (118) in a plurality of first frames of scans to detect touches on the touch-sensitive display (118) by, during each of the plurality of first frames of scans, driving a respective one of the drive electrodes (202) by applying a first plurality of pulses to the respective one of the drive electrodes (202) while sensing utilising the sense electrodes (204), wherein a different drive electrode of the plurality of drive electrodes is driven in each successive frame of scan of the plurality of first frames of scans;
receiving an indication (306) to scan in a reduced power condition;
when in the reduced power condition, scanning (310) the touch-sensitive display (118) in a plurality of second frames of scans to detect touches on the touch-sensitive display (118) by, during each of the plurality of second frames of scans driving the respective one of the drive electrodes (202) by applying a second plurality of pulses to the respective one of the drive electrodes (202) while sensing utilising the sense electrodes (204), wherein a different drive electrode of the plurality of drive electrodes is driven in each successive frame of scan of the plurality of second frames of scans;
wherein the second plurality of pulses comprises fewer pulses than the first plurality of pulses such that fewer pulses are applied to the respective one of the drive electrodes (202) when in the reduced power condition than when in the full-power operating condition, wherein a time during which the second plurality of pulses is applied in one frame of scan when in the reduced power condition is less than a time during which the first plurality of pulses is applied in one frame of scan when in the full-power operating condition; and
wherein a sleep time between scans of the touch-sensitive display (118) is greater when in the reduced power condition compared to a sleep time between scans of the touch-sensitive display (118) when in the full-power operating condition.

2. An electronic device (100) comprising:
a touch-sensitive display (118) comprising:
drive electrodes (202);
sense electrodes (204); and
at least one touch controller (116) coupled to the drive electrodes (202) and the sense electrodes (204) and configured to perform the method of claim 1.

3. A computer-readable storage medium having computer-readable code stored thereon, the computer-readable code executable by at least one of a touch controller (116) and a processor (102) of the portable electronic device (100) to perform the method of claim 1.

## Patentansprüche

1. Verfahren zum Erfassen von Berührungen auf einer berührungsempfindlichen Anzeige (118) einer elektronischen Vorrichtung, wobei die elektronische Vorrichtung eine Vielzahl von Ansteuerelektroden (202) und eine Vielzahl von Abfühlelektroden (204) umfasst, wobei das Verfahren umfasst:
Abtasten (302) der berührungsempfindlichen Anzeige (118) in einer Vielzahl von ersten Abtastbildern in einem Betriebszustand mit voller Leistung, um Berührungen auf der berührungsempfindlichen Anzeige (118) zu erfassen, indem während jedem aus der Vielzahl von ersten Abtastbildern eine jeweilige der Ansteuerelektroden (202) durch Anlegen einer ersten Vielzahl von Pulsen an die jeweilige der Ansteuerelektroden (202) während des Abfühlens unter Verwendung der Abfühlelektroden (204) angesteuert wird, wobei eine andere Ansteuerelektrode aus der Vielzahl von Ansteuerelektroden in jedem nachfolgenden Abtastbild aus der Vielzahl von ersten Abtastbildern angesteuert wird;
Empfangen einer Anzeige (306) zum Abtasten in einem Zustand mit reduzierter Leistung;
Abtasten (310) der berührungsempfindlichen Anzeige (118) in einer Vielzahl von zweiten Abtastbildern in einem Zustand mit reduzierter Leistung, um Berührungen auf der berührungsempfindlichen Anzeige (118) zu erfassen, indem während jedem aus der Vielzahl von zweiten Abtastbildern die jeweilige der Ansteuerelektroden (202) durch Anlegen einer zweiten Vielzahl von Pulsen an die jeweilige der Ansteuerelektroden (202) während des Abfühlens unter Verwendung der Abfühlelektroden (204) angesteuert wird, wobei eine andere Ansteuerelektrode aus der Vielzahl von Ansteuerelektroden in jedem nachfolgenden Abtastbild aus der Vielzahl von zweiten Abtastbildern angesteuert wird;
wobei die zweite Vielzahl von Pulsen weniger Pulse als die erste Vielzahl von Pulsen umfasst, so dass im Zustand mit reduzierter Leistung weniger Pulse an die jeweilige der Ansteuerelektroden (202) angelegt werden als im Betriebszustand mit voller Leistung, wobei eine Zeit, während der im Zustand mit reduzierter Leistung die zweite Vielzahl von Pulsen in einem Abtastbild angelegt wird, kürzer als eine Zeit ist, während der die erste Vielzahl von Pulsen in einem Abtastbild im Betriebszustand mit voller Leistung angelegt wird; und
wobei eine ruhende Zeit zwischen den Abtastungen der berührungsempfindlichen Anzeige (118) im Zustand mit reduzierter Leistung länger als eine ruhende Zeit zwischen Abtastungen der berührungsempfindlichen Anzeige (118) im Betriebszustand mit voller Leistung ist.

2. Elektronische Vorrichtung (100), umfassend:
eine Berührungsempfindliche Anzeige (118), umfassend:
Ansteuerelektroden (202);
Abfühlelektroden (204); und
mindestens eine Berührungssteuerung (116), die mit den Ansteuerelektroden (202) und den Abfühlelektroden (204) gekoppelt und konfiguriert ist, um das Verfahren nach Anspruch 1 durchzuführen.

3. Computerlesbares Speichermedium mit darauf gespeichertem computerlesbarem Code, wobei der computerlesbare Code durch eine Berührungssteuerung (116) und/oder einen Prozessor (102) der tragbaren elektronischen Vorrichtung (100) ausgeführt werden kann, um das Verfahren nach Anspruch 1 durchzuführen.

## Revendications

1. Procédé permettant de détecter des contacts tactiles sur un écran tactile (118) d'un dispositif électronique, le dispositif électronique comprenant une pluralité d'électrodes d'excitation (202) et une pluralité d'électrodes de détection (204), le procédé comprenant les étapes consistant à :
dans un état de fonctionnement à pleine puissance, balayer (302) l'écran tactile (118) dans une pluralité de premières trames de balayages pour détecter des contacts tactiles sur l'écran tactile (118), en excitant, au cours de chaque trame de la pluralité de premières trames de balayages, l'une respective des électrodes d'excitation (202) par application d'une première pluralité d'impulsions à celle respective des électrodes d'excitation (202) tout en détectant l'utilisation des électrodes de détection (204), dans lequel une électrode d'excitation différente parmi la pluralité d'électrodes d'excitation est excitée dans chaque trame successive de balayage de la pluralité de premières trames de balayages ;
recevoir une indication (306) pour balayer dans un état de puissance réduite ;
à l'état de puissance réduite, balayer (310) l'écran tactile (118) dans une pluralité de secondes trames de balayages pour détecter des contacts tactiles sur l'écran tactile (118), en excitant, au cours de chaque trame de la pluralité de secondes trames de balayages, celle respective des électrodes d'excitation (202) par application d'une seconde pluralité d'impulsions à celle respective des électrodes d'excitation (202) tout en détectant l'utilisation des électrodes de détection (204), dans lequel une électrode d'excitation différente parmi la pluralité d'électrodes d'excitation est excitée dans chaque trame successive de balayage de la pluralité de secondes trames de balayages ;
dans lequel la seconde pluralité d'impulsions comprend moins d'impulsions que la première pluralité d'impulsions, de sorte que moins d'impulsions sont appliquées à celle respective des électrodes d'excitation (202), à l'état de puissance réduite qu'à l'état de fonctionnement à pleine puissance, dans lequel un temps pendant lequel la seconde pluralité d'impulsions est appliquée dans une trame de balayage à l'état de puissance réduite, est inférieur à un temps pendant lequel la première pluralité d'impulsions est appliquée dans une trame de balayage à l'état de fonctionnement à pleine puissance ; et
dans lequel un temps de repos entre des balayages de l'écran tactile (118) est supérieur à l'état de puissance réduite comparativement à un temps de repos entre des balayages de l'écran tactile (118) à l'état de fonctionnement à pleine puissance.

2. Dispositif électronique (100) comprenant :
un écran tactile (118) comprenant :
des électrodes d'excitation (202) ;
des électrodes de détection (204) ; et
au moins un dispositif de commande tactile (116) couplé aux électrodes d'excitation (202) et aux électrodes de détection (204) et configuré pour mettre en œuvre le procédé selon la revendication 1.

3. Support de stockage lisible par ordinateur sur lequel est stocké un code lisible par ordinateur, le code lisible par ordinateur pouvant être exécuté par un dispositif de commande tactile (116) et/ou un processeur (102) du dispositif électronique portable (100) pour mettre en œuvre le procédé selon la revendication 1.
